# EUROPÄISCHE PATENTSCHRIFT

(11) **EP 3 505 700 B1**
(45) Veröffentlichungstag und Bekanntmachung des Hinweises auf die Patenterteilung: **25.02.2026**
(21) Anmeldenummer: 18213059.1
(22) Anmeldetag: 17.12.2018
(51) Int. Cl.: E04D 3/08, A01G 9/14, A01G 9/20, F21V 33/00, F16B 21/07, F21V 21/088, F21V 21/02

(54) **VERFAHREN ZUR MONTAGE EINES LEUCHTMITTELS AN EINEM STATIKELEMENT EINER ÜBERDACHUNGSVORRICHTUNG, BEFESTIGUNGSMITTEL ZUR BEFESTIGUNG EINES STREIFENARTIGEN BAUTEILS UND ÜBERDACHUNGSVORRICHTUNG**
METHOD FOR MOUNTING A LIGHT ON A STRUCTURAL ELEMENT OF A COVER DEVICE, MEANS FOR ATTACHING A STRIP-LIKE COMPONENT AND COVER DEVICE
PROCÉDÉ DE MONTAGE D'UN MOYEN D'ÉCLAIRAGE SUR UN ÉLÉMENT STATIQUE D'UN DISPOSITIF DE TOITURE, DISPOSITIF DE FIXATION DESTINÉ À LA FIXATION D'UN COMPOSANT DE TYPE BANDE ET DISPOSITIF DE TOITURE

(30) Priorität: 29.12.2017 DE 102017223891; 29.12.2017 DE 202017006638 U
(43) Veröffentlichungstag der Anmeldung: 03.07.2019
(73) Patentinhaber: Kneer, Ingo, 88521 Ertingen (DE)
(72) Erfinder: Kneer, Ingo, 88521 Ertingen (DE)
(74) Vertreter: Isarpatent

(56) Entgegenhaltungen:
- EP-A1- 1 229 624
- DE-A1- 10 160 367
- DE-A1- 102010 023 497

## Beschreibung

### GEBIET DER ERFINDUNG

Die vorliegende Erfindung betrifft ein Verfahren zur Montage eines Leuchtmittels an einem Statikelement einer Überdachungsvorrichtung, ein Befestigungsmittel zur Befestigung eines streifenartigen Bauteils, insbesondere eines streifenartigen Leuchtmittels, sowie eine damit hergestellte Überdachungsvorrichtung.

### TECHNISCHER HINTERGRUND

Überdachungen werden für unterschiedlichste Anwendungen eingesetzt. Eine häufig anzutreffende Art von Überdachungen stellen sogenannte Terrassenüberdachungen dar.

Obwohl die vorliegende Erfindung und die ihr zugrunde liegende Problematik im Folgenden anhand einer Terrassenüberdachung beschrieben werden, sind sie darauf nicht begrenzt sondern auf vielfältige Arten von Überdachungen übertragbar.

Terrassenüberdachungen weisen oftmals Sparren mit variierbarem Anstellwinkel auf. Bei einer Variierbarkeit des Anstellwinkels der Sparren ergibt sich auch die Notwendigkeit der Variierbarkeit des Anstellwinkels der Dachpaneele oder Ausfachungen, welche üblicherweise an den Sparren gelagert sind.

Der Anmelder hat hierzu eine in der DE 20 2016 005 196 U1 beschriebene Lösung aufgefunden, welche am Längsträgerprofil einer Überdachungsvorrichtung in Längsrichtung lokal begrenzt einen Einführabschnitt vorsieht, an welchem ein zur Aufnahme eines Sparrenhalters ausgebildeter Lagerprofilabschnitt derart ausgenommen ist, dass er zur Montage in einen Umgreifabschnitt des Sparrenhalters einführbar ist. Auf diese Weise lässt sich ein Formschluss zwischen Längsträgerprofil und Sparrenhalter durch Längsverschiebung herstellen. Bei Terrassenüberdachungen besteht oftmals der Wunsch nach einer Beleuchtung des überdachten Bereichs. Oftmals werden dazu bisweilen Leuchtmittel an der Unterseite der Statikelemente, d. h. der Sparren, des Längsträgerprofils und/oder einer Pfette, befestigt.

Aufgrund der variablen Farbwahl und des homogenen Beleuchtungseffekts sind sogenannte LED Streifen für Beleuchtungszwecke, insbesondere im Falle von RGB-LEDs als Ambientebeleuchtung mit wechselbaren Farben, vorteilhaft. Handelsübliche LED-Streifen weisen zur Befestigung an der Rückseite eine Klebefläche auf. Diese sind leicht an einer Unterseite von Statikelementen anklebbar. Nachteilig kann sich eine derartige Klebeverbindung jedoch mit der Zeit lösen.

Aus anderen Fachgebieten sind Montagemittel bekannt, wie beispielsweise aus der DE 101 60 367 A1. Diese zeigt die Montage eines Kabelschachts mit einem Befestigungselement, das eine Sollbruchstelle zum Lösen eines Teilelements aufweist. Aus EP 1 229 624 A1 ist ein Verfahren zur Montage eines Leuchtmittels an einem Statikelement bekannt.

### ZUSAMMENFASSUNG DER ERFINDUNG

Vor diesem Hintergrund liegt der vorliegenden Erfindung die Aufgabe zugrunde, ein verbessertes Verfahren zur Montage eines Leuchtmittels an einem Statikelement einer Überdachungsvorrichtung sowie ein dazu geeignetes Befestigungsmittel und eine entsprechende Überdachungsvorrichtung anzugeben.

Erfindungsgemäß wird diese Aufgabe durch ein Verfahren mit den Merkmalen des Patentanspruchs 1 und/oder durch ein Befestigungsmittel mit den Merkmalen des Patentanspruchs 7 und/oder eine Überdachungsvorrichtung mit den Merkmalen des Patentanspruchs 11 gelöst.

Demgemäß ist vorgesehen:
- Ein Verfahren zur Montage eines Leuchtmittels an einem Statikelement einer Überdachungsvorrichtung, mit den folgenden Schritten: Einführen des Leuchtmittels in eine in dem Statikelement zur Aufnahme des Leuchtmittels vorgesehene Ausnehmung; Einführen eines einen Griff aufweisenden Befestigungsmittels in die Ausnehmung; Befestigen des Leuchtmittels mit dem Befestigungsmittel in der Ausnehmung durch händische Manipulation des Griffs; und Abtrennen des Griffs von dem Befestigungsmittel durch händische Manipulation des Griffs, wobei die Schritte in dieser Reihenfolge durchgeführt werden.
- Ein Befestigungsmittel zur Überkopfmontage und Befestigung eines streifenartigen Bauteils, insbesondere eines streifenartigen Leuchtmittels, mit: einem Befestigungsabschnitt, und einem einteilig mit dem Befestigungsabschnitt und davon abstehend ausgebildeten Griff, wobei der Befestigungsabschnitt zur händisch über den Griff betätigten Befestigung des streifenartig ausgebildeten Bauteils in einer in einem Statikelement vorgesehenen Ausnehmung ausgebildet ist, wobei an einem an den Befestigungsabschnitt anschließenden Fuß des Griffs eine Sollbruchstelle vorgesehen ist, welche ausgebildet und vorgesehen ist, zu der händisch betätigten Befestigung des streifenartig ausgebildeten Bauteils in der in dem Statikelement vorgesehenen Ausnehmung standzuhalten und in einem befestigten Zustand des über Kopf montierten streifenartig ausgebildeten Bauteils den Griff durch händische Manipulation von dem Befestigungsabschnitt abzutrennen.
- Eine Überdachungsvorrichtung, mit: einem Statikelement, welches eine zur Aufnahme eines streifenartigen Leuchtmittels vorgesehene Nut aufweist, einem in der Nut angeordneten streifenartigen Leuchtmittel, und einem erfindungsgemäßen Befestigungsmittel, wie zuvor beschrieben, in Form eines spangenartig ausgebildeten Rastmittels, welches das streifenartige Leuchtmittel in der Nut befestigt.

Die der vorliegenden Erfindung zugrunde liegende Erkenntnis besteht darin, dass eine witterungsbeständige und ästhetisch ansprechende Befestigung von streifenartigen Leuchtmitteln, insbesondere LED-Streifen, einer Anordnung in einer Ausnehmung, insbesondere Nut, und eines mechanischen Befestigungsmittels zur Befestigung in der Nut bedarf.

Die der vorliegenden Erfindung zugrunde liegende Idee besteht nun darin, Zur Befestigung eines streifenartigen Leuchtmittels in einer Ausnehmung eines Statikelements ein Befestigungsmittel bereitzustellen, welches einen speziell zur Befestigung ausgelegten und nach der Befestigung händisch abtrennbaren Griff aufweist.

Auf diese Weise ist eine sehr einfache, schnelle, sichere und ästhetisch ansprechende Montage eines streifenartigen Leuchtmittels ermöglicht, welche wetterbeständig ist und das Leuchtmittel dauerhaft sichert.

Es wird eine werkzeugfreie und dadurch sehr einfach durchzuführende Überkopfmontage des Leuchtmittels ermöglicht. Darüber hinaus lässt sich das Befestigungsmittel, insbesondere im Vergleich zu Klebeverbindungen, auch wieder leicht demontieren, beispielsweise zum Austausch des streifenartigen Leuchtmittels.

Die Ausnehmung kann deutlich größer als das streifenartige Leuchtmittel selbst ausgebildet sein. Die Positionierung des Leuchtmittels innerhalb der Ausnehmung erfolgt durch das Befestigungsmittel. Insbesondere ist daher eine kleberfreie Montage ermöglicht, ohne dass die Gefahr der Beschädigung des LED-Streifens beim Einführen in die Ausnehmung besteht. Das Befestigungsmittel ist, vorzugsweise einteilig, aus einem Griff und einem Befestigungsabschnitt aufgebaut. Es ist insbesondere zur Montage streifenartiger Leuchtmittel ausgelegt. Darüber hinaus sind damit aber auch andersartige streifenartige Bauteile, wie beispielsweise Kabelkanäle oder dergleichen, damit befestigbar.

Das Statikelement stellt ein tragendes Element einer Überdachungsvorrichtung dar. Beispielsweise kann es sich um einen Sparren, einen Wandanschluss und/oder eine Pfette handeln. Denkbar ist ferner, einen Pfosten als Statikelement vorzusehen und das Leuchtmittel daran anzubringen.

Die Ausnehmung ist bei einer Überdachungsvorrichtung in einem Statikelement, vorzugsweise in einem Statikprofil, wie beispielsweise einem Sparren- Wandanschluss oder Pfettenprofil, vorgesehen. Derartige Statikelemente werden üblicherweise mit einem Strangpressprofil gebildet, in welchem die Ausnehmung in Form einer Nut integral vorgesehen werden kann. Die Ausnehmung braucht somit vorteilhaft nicht erst in das Statikelement eingebracht werden, sondern kann bereits beim Urformen eines Statikprofils vorgesehen werden.

Mit dem Griff des Befestigungsmittels, dessen Gestalt insbesondere auf die Gestalt der Ausnehmung abgestimmt ist, lässt sich das Befestigungsmittel auf komfortable Weise werkzeugfrei montieren. Es ist somit eine werkzeugfreie Befestigung des streifenartigen Leuchtmittels in der Nut ermöglicht. Dennoch beeinflusst der Griff des Befestigungsmittels den zur Aufnahme des Befestigungsmittels im montierten Zustand notwendigen Bauraum nicht, da der Griff nach dem händischen Befestigen abtrennbar vorgesehen ist.

Für eine derartige Auslegung des Befestigungsmittels ist erfindungsgemäß eine Sollbruchstelle am Fuße des Griffs vorgesehen. Beispielsweise kann es sich um eine Verjüngung oder Kante handeln, welche am Übergang von dem Befestigungsabschnitt zu dem Griff des Befestigungsmittels vorgesehen ist.

Ein Befestigungsabschnitt des Befestigungsmittels ist vorzugsweise als spangenartiges Rastmittel bzw. als Rastspange ausgebildet. Das Rastmittel ist dazu vorgesehen, das streifenartige Leuchtmittel zu überqueren. Dazu ist das spangenartige Rastmittel breiter als lang ausgebildet, sodass es im montierten Zustand nur einen möglichst kleinen Bereich des streifenartigen Leuchtmittels, vorzugsweise einen nicht leuchtenden Teil, abdeckt.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform des erfindungsgemäßen Verfahrens ist das Befestigungsmittel als Rastmittel ausgebildet und wird durch Manipulation des Griffs in der Ausnehmung verrastet. Vorteilhaft ist auf diese Weise eine werkzeugfreie Befestigung ermöglicht, welche auch an einer Sollbruchstelle zerstörungsfrei durchgeführt werden kann.

Gemäß einer vorteilhaften Weiterbildung umfasst die zum Verrasten vorgenommene Manipulation des Griffs dementsprechend das Aufbringen einer Druckbelastung auf das Rastmittel. Besonders vorteilhaft sind Druckbelastungen durch Aufbringen eines Drucks auf den Griff an einer zum Abtrennen des Griffs vorgesehenen Sollbruchstelle des Befestigungsmittels übertragbar, ohne dass die Sollbruchstelle bereits beim Befestigen bricht.

Gemäß einer bevorzugten Ausführungsform umfasst das Abtrennen ein Tordieren durch Verdrehen des Griffs. Die bei den Tordieren aufgebrachte Torsionsbelastung stellt vorteilhaft eine zum Abtrennen besonders geeignete Belastungsart dar, da diese einerseits leicht in einem Griff aufzubringen ist und andererseits damit an einer Sollbruchstelle eine vorbestimmte Einschnürung erreichbar ist, sodass sich der Griff leicht abtrennen lässt. Insbesondere kann der Griff zum Aufbringen der Torsionsbelastung ausgebildet und ausgelegt sein, beispielsweise mit einem dem Befestigungsabschnitt abgewandt angeordneten verbreiterten oder flügelartig ausgebildeten Abschnitt.

Gemäß einer Ausführungsform weist das Leuchtmittel einen LED Streifen auf und das Befestigungsmittel wird zum Befestigen in einem Bereich, insbesondere einem Zwischenraum, zwischen zwei benachbarten LEDs angeordnet. Vorteilhaft wird auf diese Weise eine Verdunklung durch das Befestigungsmittel vermieden. Zudem ist die Befestigung an einer Vielzahl von zwischen den LED liegenden Abschnitten entlang des LED Streifens bedarfsgerecht möglich.

Gemäß einer vorteilhaften Ausführungsform ist die Ausnehmung als Nut ausgebildet. Ferner weist das Befestigungsmittel eine Breite auf, welche größer als eine offene Nutbreite der Nut ausgebildet ist. Die offene Nutbreite ist wiederum größer als eine Länge des Befestigungsmittels ausgebildet. Das Einführen in die Nut wird dabei in einer Stellung des Befestigungsmittels vorgenommen, welche zu einer Stellung bei dem Befestigen verdreht vorgesehen wird. Insbesondere wird das Befestigungsmittel in einer Längsausrichtung in die Nut eingeführt und anschließend in eine Querausrichtung, insbesondere um etwa 90° um eine durch den Griff verlaufende Achse, verdreht. Auf diese Weise kann das Befestigungsmittel einerseits leicht die Nut eingeführt werden und andererseits durch Verdrehen leicht ein das streifenartige Leuchtmittel in der Nut sichernder Formschluss hergestellt werden. Dies ist besonders vorteilhaft rein händisch und ohne Absetzen möglich, da sowohl die 90° Drehung als auch der Druck in einem Zug händisch möglich sind.

Gemäß einer vorteilhaften Ausführungsform eines Befestigungsmittels ist die Sollbruchstelle zum Abtrennen durch eine zum händischen Befestigen unterschiedliche händische Manipulation ausgebildet. Insbesondere wird zum Befestigen eine andersartige mechanische Belastung als zum Abtrennen aufgebracht. Auf diese Weise wird vorteilhaft ein versehentliches Abtrennen bei dem Befestigen vermieden.

Gemäß einer vorteilhaften Weiterbildung sind der Griff und die Sollbruchstelle zur Befestigung des Befestigungsabschnitts durch händischen Druck und zum Abtrennen des Griffs durch händische Torsion ausgebildet. Auf diese Weise kann die Befestigungskraft ohne ein Nachgeben der Sollbruchstelle übertragen werden, zumal eine Druckbelastung zu keiner Einschnürung der Sollbruchstelle führt. Die zum Abtrennen aufgebrachte Torsion führt hingegen zum Einschnüren des Materials des Griffs im Bereich der Sollbruchstelle so dass das Abtrennen auf einfache Weise ermöglicht ist.

Gemäß einer vorteilhaften Ausführungsform des Befestigungsmittels ist der Befestigungsabschnitt als Rastmittel, insbesondere als spangenartig ausgebildetes Rastmittel bzw. Rastspange, ausgebildet. Beispielsweise ist der Befestigungsgriff mit seinem Fuß mittig an das Rastmittel angeformt. Somit kann das Rastmittel leicht innerhalb der Nut verdreht werden. Bei weiteren Ausführungsformen kann der Griff aber auch außermittig bzw. exzentrisch an dem Rastmittel angeordnet bzw. angeformt sein. Dies kann beispielsweise zum Verrasten vorteilhaft sein, da das Rastmittel so an einer von dem Griff abgewandten Seite eingehängt werden kann und an der Seite des Griffs mit einer gewissen Hebelwirkung verrastet werden kann.

Bei dem Rastmittel handelt es sich insbesondere um eine Rastspange mit zwei jeweils am Rand vorgesehenen Rastfortsätzen. Der Griff ist vorzugsweise an einer den Rastfortsätzen abgewandten Seite an der Spange angeordnet.

Beispielsweise kann das Befestigungsmittel als Kunststoff-Spritzgussteil ausgebildet sein, sodass der Befestigungsabschnitt und der Griff bereits beim Urformen einteilig geformt werden können. Bei weiteren Ausführungsformen wäre es zur Herstellung der Einteiligkeit auch denkbar, nach einem separaten Urformprozess des Griffs und des Befestigungsabschnitts den Griff stoffschlüssig an dem Befestigungsmittel anzubringen.

Gemäß einer bevorzugten Ausführungsform weist das streifenartige Leuchtmittel einen LED-Streifen auf, welcher in der Nut gelagert und darin mit dem spangenartigen Rastmittel befestigt ist. Vorteilhaft sind auf diese Weise vielfältige Leuchtcharakteristika möglich, beispielsweise durch den Einsatz von RGB-LEDs in vielfältigen Farben. Denkbar ist auch optional oder zusätzlich verschiedene Weißabstufungen von LEDs vorzusehen, wie Warmweiß, Kaltweiß, oder dergleichen.

Insbesondere kann der LED Streifen in einem C-Profil aufgenommen sein, welches in der Nut gelagert und mit dem Rastmittel befestigt ist. Vorzugsweise ist der LED Streifen zur Vormontage in das C-Profil eingeklebt. Durch das Befestigungsmittel ist der LED-Streifen im endmontierten Zustand dann dauerhaft in dem C-Profil gesichert, auch falls sich der Kleber mit der Zeit lösen sollte.

Mit dem C-Profil ist der LED-Streifen vorteilhaft gegen bei dem Befestigen aufgebrachte Druckkräfte geschützt, sodass Beschädigungen vermieden werden. Darüber hinaus ist der LED Streifen mit dem C-Profil auch vor Beschädigungen beim Einführen in die Nut und bei Transport und Lagerung gesichert. Ferner kann so eine Druckkraft in Längsrichtung über das C-Profil übertragen werden, beispielsweise um den LED-Streifen mit einem endseitig an dem Statikelement im Bereich der Nut, insbesondere in einem Sparrenhalter, angeordneten Stecker zu kontaktieren, sodass die Kontaktierung sehr einfach und werkzeugfrei ermöglicht ist.

Gemäß einer bevorzugten Ausführungsform sind innerhalb der Nut zu dem Rastmittel korrespondierende Gegenrastmittel vorgesehen, welche mit dem Rastmittel in Eingriff stehen. Das streifenartige Leuchtmittel ist somit kraftschlüssig in der Nut gesichert.

Gemäß einer vorteilhaften Ausführungsform ist die Nut breiter als das streifenartige Leuchtmittel ausgebildet und die Gegenrastmittel sind auf eine Breite des streifenartigen Leuchtmittels abgestimmt angeordnet. Eine laterale Position des streifenartigen Leuchtmittels in der Nut ist somit durch die Gegenrastmittel vorgeben. Vorteilhaft wird auf diese Weise eine Fehlpositionierung bei der Montage ausgeschlossen.

Gemäß einer Ausführungsform erstreckt sich das spangenartig ausgebildete Rastmittel quer über das streifenartige Leuchtmittel. Das Rastmittel ist dabei insbesondere in einen Zwischenraum zwischen zwei benachbarten LEDs des LED-Streifens angeordnet. Somit ist eine Verdunklung durch das Rastmittel vermieden.

Bei einer bevorzugten Ausführungsform ist die Nut des Statikelements ferner mit einer transparenten oder teiltransparenten bzw. diffusen Abdeckung versehen. Auf diese Weise wird ein Schutz gegen Flüssigkeitseintritt bereitgestellt und der ästhetische Eindruck des Statikelements verbessert. Ferner kann das austretende Licht damit gezielt gestreut werden.

Die obigen Ausgestaltungen und Weiterbildungen lassen sich, sofern sinnvoll, beliebig miteinander kombinieren. Insbesondere sind sämtliche Merkmale des Befestigungsmittels und der Überdachungsvorrichtung auf das Verfahren zur Montage eines Leuchtmittels an einem Statikelement einer Überdachungsvorrichtung übertragbar, und umgekehrt. Das Befestigungsmittel dient insbesondere der Durchführung des Verfahrens. Das Leuchtmittel der Überdachungsvorrichtung ist insbesondere gemäß dem Verfahren zur Montage des Leuchtmittels und/oder mit dem Befestigungsmittel zur Befestigung eines streifenartigen Bauteils montiert.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung, solange sie in den Umfang der Erfindung fallen, wie er durch die Ansprüche definiert ist.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Querschnittansicht eines Statikelements;
- Fig. 2: eine Querschnittansicht eines streifenartigen Leuchtmittels;
- Fig. 3: eine perspektivische Ansicht eines Befestigungsmittels zur Befestigung des Leuchtmittels nach Fig. 2;
- Fig. 4: eine perspektivische Darstellung eines Statikelements sowie unterschiedlichen Zuständen eines Befestigungsmittels beim Befestigen eines streifenartigen Leuchtmittels;
- Fig. 5: eine Querschnittansicht durch ein Statikelement einer Überdachungsvorrichtung mit befestigtem Leuchtmittel;
- Fig. 6: eine perspektivische Detaildarstellung der Position eines Befestigungsmittels;
- Fig. 7: eine perspektivische Darstellung einer Terrassenüberdachung mit Wandanschluss; und
- Fig. 8: eine perspektivische Darstellung einer Terrassenüberdachung mit Firstpfette.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

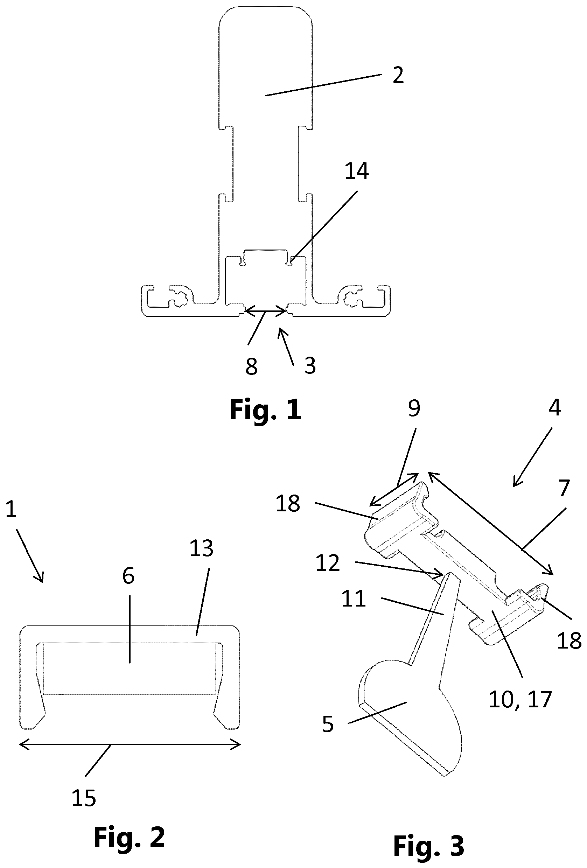

Fig. 1 zeigt eine Querschnittansicht eines Statikelements 2.

Das Statikelement 2 ist hier beispielhaft als Sparren einer Überdachungsvorrichtung mit einem im Wesentlichen T-förmigen Querschnitt ausgebildet. Die beiden T-Arme sind dabei an der Unterseite des Querschnittes angeordnet und erstrecken sich senkrecht zu einem mittigen T-Fuß. Die T-Arme sind zur Aufnahme einer Ausfachung der Überdachungsvorrichtung ausgelegt.

Das Statikelement 2 weist an seiner Unterseite, welche hier eine Rückseite der T-Arme darstellt, eine Ausnehmung 3 in Form einer durchgehenden Nut auf. Die Nut 3 ist im Inneren des T-Fußes breiter als an Ihrer offenen Nutbreite 8 an der Unterseite ausgebildet. Innerhalb der Nut 3 sind zwei zur Befestigung eines streifenartigen Leuchtmittels 1 vorgesehene Rastvorsprünge angeordnet, welche als mit einem Rastmittel 4 verrastbare Gegenrastmittel 14 dienen. Die Gegenrastmittel 14 legen dabei eine mittige Positionierung des streifenartigen Leuchtmittels 1 innerhalb der Nut 3 fest.

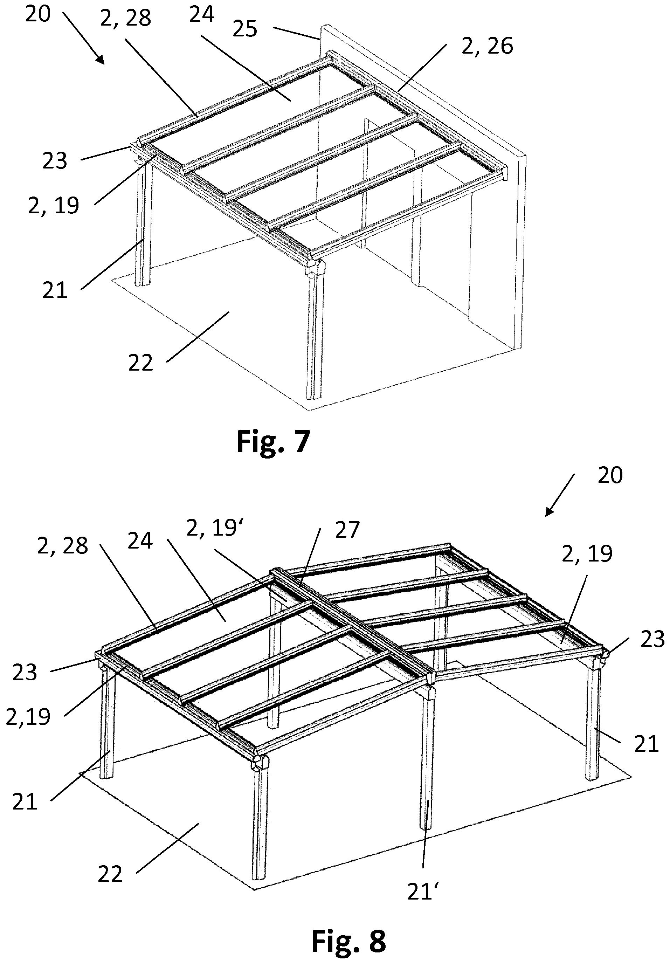

Die Ausbildung der Nut 3 ist neben einem Sparren 28 gleichermaßen auf andere Statikelemente 2 einer Überdachungsvorrichtung 20 übertragbar, beispielsweise auf eine Pfette 19 oder ein Wandanschlussprofil 26 (siehe Fig. 7 und 8), welche in diesem Fall eine im Wesentlichen gleich ausgebildete Nut 3 zur Aufnahme des streifenartigen Leuchtmittels 1 aufweisen.

Fig. 2 zeigt eine Querschnittansicht eines streifenartigen Leuchtmittels 1.

Bei dem streifenartigen Leuchtmittel 1 handelt es sich um einen in einem C-Profil 13 aufgenommenen LED Streifen 6. Das C-Profil 13 kann beispielsweise als Aluminiumprofil ausgebildet sein. Eine Breite 15 des C-Profils 13 ist auf die Anordnung der Gegenrastmittel 14 in der Nut 3 abgestimmt, sodass die mittige Positionierung des Leuchtmittels 1 zwischen den Gegenrastmitteln 14 in der Nut 3 vorgegeben ist, in welcher es mit einem Befestigungsmittel 4 befestigbar ist.

Der LED Streifen 6 ist zur Vormontage in das C-Profil 13 eingeklebt, gegebenenfalls mit dem handelsüblich an der Rückseite des LED Streifens 6 vorgesehenen Klebestreifen. Zur Endmontage wird der LED-Streifen 6 mit einem Befestigungsmittel 4 in dem C-Profil 13 gesichert. Somit verbleibt der LED Streifen 6 im montierten Zustand stets an seiner vorbestimmten Position, auch falls sich der Kleber löst.

Fig. 3 zeigt eine perspektivische Ansicht eines Befestigungsmittels 4 zur Befestigung des Leuchtmittels 1 nach Fig. 2.

Das Befestigungsmittel 4 ist zur Befestigung des Leuchtmittels 1 in der Nut 3 vorgesehen und ausgelegt. Dazu weist es einen Befestigungsabschnitt 10 und einem einteilig mit dem Befestigungsabschnitt 10 ausgebildeten Griff 5 auf.

Der Griff 5 ist beispielhaft mittig an dem Befestigungsabschnitt 10 angeordnet und steht senkrecht davon ab. Bei weiteren Ausführungsformen sind aber auch außermittige Positionierungen des Griffs 5 an dem Befestigungsabschnitt 10 möglich, insbesondere angepasst an die Geometrie einer korrespondierenden Nut 3 und/oder an die zum Verrasten erwünschten Hebelverhältnisse.

Ein Fuß 11 des Griffs 5 verjüngt sich stetig zu den Befestigungsabschnitt 10 hin und bildet am Übergang zu dem Befestigungsabschnitt 10 eine Sollbruchstelle 12 aus.

An einem von dem Befestigungsabschnitt 10 abgewandten Ende ist der Griff 5 verbreitert ausgebildet, was der besseren Greifbarkeit sowie der einfacheren Aufbringung einer Torsionskraft zum Abtrennen des Griffs 5 von dem Befestigungsabschnitt 10 dient. Die Sollbruchstelle 12 ist derart ausgelegt, dass sie einen zur händisch betätigten Befestigung aufgebrachten Druck standhält und in einem befestigten Zustand das Abtrennen des Griffs 5 von dem Befestigungsabschnitt 10 durch händisches Tordieren des Griffs 5 erlaubt.

Der Befestigungsabschnitt 10 ist als spangenartiger Rastabschnitt ausgebildet und zur händisch über den Griff 10 betätigten Befestigung des streifenartig ausgebildeten Leuchtmittels 1 durch Aufbringen eines Drucks ausgelegt. Er weist dazu an seiner dem Griff 5 abgewandten Seite zwei endseitige Rastfortsätze 18 auf, welche zu den Gegenrastmitteln 14 der Nut 3 korrespondierend ausgebildet sind. Ferner ist mittig gegenüber dem Griff ein auf das streifenartig ausgebildete Leuchtmittel 1 abgestimmter zentraler Niederhalter zur definierten Anlage des Leuchtmittels 1 an einem Nutgrund der Nut 3 vorgesehen. Dieser dient ferner der dauerhaften Festlegung des LED-Streifens 6 in dem C-Profil 13, falls sich der Kleber lösen sollte.

Das Befestigungsmittel 4 weist an seinem Befestigungsabschnitt 10 eine Breite 7 auf, welche größer als die offene Nutbreite 8 der Nut 3 jedoch kleiner als eine maximale Breite im Inneren der Nut 3 ausgebildet ist. Eine Länge 9 des Befestigungsmittels 4 im Befestigungsabschnitt 10 ist hingegen kleiner als die offene Nutbreite 8.

Bei dem Befestigungsmittel 4 handelt es sich in der dargestellten Ausführungsform um ein einteilig geformtes Spritzgussteil, welches insbesondere aus einem Kunststoff gebildet ist.

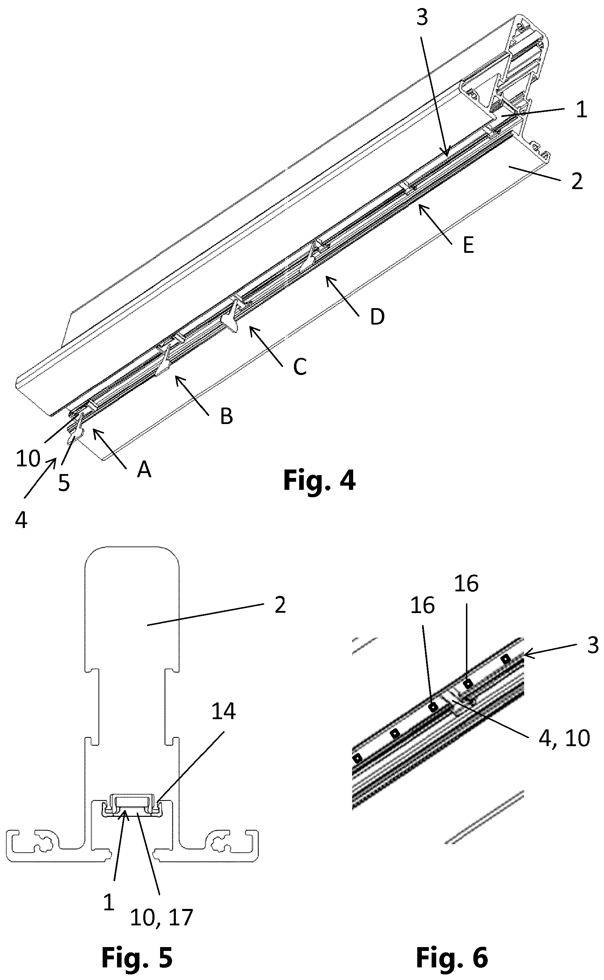

Fig. 4 zeigt eine perspektivische Darstellung eines Statikelements 2 und unterschiedlichen Zustände eines Befestigungsmittels 4 beim Befestigen eines streifenartigen Leuchtmittels 1.

In dem dargestellten Zustand des Statikelements 2 ist bereits ein streifenartiges Leuchtmittel 1 in die Nut 3 eingeführt, was einen ersten Schritt eines Verfahrens zur Montage des Leuchtmittels 1 darstellt. Das Leuchtmittel 1 ist zwischen den Gegenrastmitteln 14 positioniert. Dazu kann es entweder um 90° verdreht durch die offene Nutbreite von unten nach oben eingeführt oder seitlich von einer Stirnseite des Statikelements 2 her eingeschoben werden.

Zur Befestigung des Leuchtmittels 1 wird das Befestigungsmittel 4 mit seinem Befestigungsabschnitt 10 in die Nut 3 eingeführt. Vor dem Einführen in die Nut 3 wird das Befestigungsmittel 4 in eine erste Stellung A gebracht, in welcher die Breite 7 des Befestigungsabschnitts 10 längs der Nut 10 ausgerichtet ist, sodass der Befestigungsabschnitt 10 durch die offene Nutbreite 8 passt.

In einer darauffolgenden Position B ist der Befestigungsabschnitt 10 in die Nut 3 eingeführt.

Zum Befestigen des Befestigungsmittels 4 wird dieses dann um 90° in eine zweite Stellung C verdreht, sodass die breite Seite des Befestigungsabschnitts 10 quer innerhalb der Nut 3 angeordnet ist.

Ausgehend davon kann das Leuchtmittel 1 durch Aufbringen einer Druckkraft auf den Griff 5 befestigt werden, indem der als spangenartiges Rastmittel 17 ausgebildete Befestigungsabschnitt 10 in Eingriff mit den Gegenrastmitteln 14 in der Nut 3 gebracht wird.

Ist das Rastmittel 17 eingerastet kann der Griff 5 durch Verdrehen von dem Befestigungsabschnitt 10 abgetrennt werden. An der dargestellten Position D ist der Griff 5 um 90° zu dem Befestigungsabschnitt 10 tordiert, sodass sich die Sollbruchstelle 12 verjüngt bzw. bricht und der Griff 5 somit abgetrennt wird.

Schließlich verbleibt das Befestigungsmittel 4 in einer Stellung E, in welcher der Griff 5 von dem in der Nut verbleibenden Befestigungsabschnitt 10 abgetrennt und das Leuchtmittel 1 kraftschlüssig damit befestigt ist.

Fig. 5 zeigt eine Querschnittansicht eines Statikelements 2 einer Überdachungsvorrichtung 20 mit darin befestigtem Leuchtmittel 1.

Es handelt sich dabei um das in Fig. 1 dargestellte Statikelement 2, wobei das streifenartige Leuchtmittel 1 in der Nut 3 angeordnet und mit dem als spangenartiges Rastmittel 17 ausgebildeten Befestigungsabschnitt 10 in der in Bezug auf Fig. 4 beschriebenen Weise in der Nut 3 befestigt ist.

Bei dem streifenartigen Leuchtmittel 1 handelt es sich um den in einem C-Profil 13 aufgenommenen LED-Streifen 6 gemäß Fig. 2, welcher zwischen den die Position des Leuchtmittels 1 vorgebenden Gegenrastmitteln 14 in der Nut 3 gelagert ist. Das streifenartige Leuchtmittel 1 ist darin mit dem quer über den LED-Streifen 6 verlaufenden und mit den Gegenrastmitteln 14 verrasteten spangenartigen Rastmittel 17 befestigt.

Fig. 6 zeigt eine perspektivische Detaildarstellung der Position eines Befestigungsmittels 4.

Der LED-Streifen 6 weist regelmäßig beabstandete LEDs 16 auf. Ein Abstand bzw. ein Zwischenraum zwischen zwei benachbarten LEDs 16 ist größer als die vergleichsweise geringe Länge 9 des Befestigungsabschnitts 10 des Befestigungsmittels 4.

Der sich mit dem spangenartig ausgebildeten Rastmittel 17 quer über das streifenartige Leuchtmittel 1 erstreckende Befestigungsabschnitt 10 ist in dem Zwischenraum zwischen zwei LEDs vorgesehen. Dazu wird das Befestigungsmittel 4 bei dem Befestigen in der Stellung C gemäß Fig. 4 zwischen zwei benachbarten LEDs 16 des LED-Streifens 6 angeordnet und verrastet.

Fig. 7 zeigt eine perspektivische Darstellung einer Terrassenüberdachung mit Wandanschluss.

Bei der Terrassenüberdachung handelt es sich um eine Ausführungsform einer Überdachungsvorrichtung 20, bei welcher eine Vielzahl von mit streifenartigen Leuchtmitteln versehenen Statikelementen 2 vorgesehen sind. Bei der dargestellten Ausführungsform sind rein beispielhaft Statikelemente 2 in Form von fünf parallelen Sparren 28, einem Wandanschlussprofil 26 sowie einer Pfette 19 vorgesehen. Zudem sind Pfosten 21 vorgesehen, die hier beispielhaft nicht beleuchtet sind.

Bei weiteren Ausführungsformen können optional oder zusätzlich die Pfosten 21 als mit streifenartigen Leuchtmitteln versehene Statikelemente ausgebildet sein.

Zur Lagerung der Sparren 28 ist das Wandanschlussprofil 26 an einer Wand 25 befestigt vorgesehen. Die parallelen Sparren 28 sind an dem Wandanschlussprofil 26 mittels Sparrenhaltern drehbar gehaltert. Zwischen den Sparren 28 verläuft eine Ausfachung 24, die beispielhaft als Glasausfachung ausgeführt ist. Alternativ oder Zusätzlich kann aber auch eine Ausfachung 24 in Form von andersartigen Platten, beispielsweise sogenannten Doppelstegplatten oder lichtundurchlässigen Platten vorgesehen sein.

An einem dem Wandanschlussprofil 26 gegenüberliegenden Ende der Sparren 28 sind diese über ein Schwenklager an einer parallel zu dem Wandanschlussprofil 26 verlaufenden Pfette 19 gelagert. Ein Anstellwinkel der Sparren 28 ist relativ zu der Wand 25 bzw. dem daran fixierten Wandanschlussprofils 26 positiv, sodass die Überdachungsvorrichtung 20 von dem Wandanschlussprofil 26 aus zu der Pfette 19 hin abfällt. Die Pfette 19 bildet hier somit eine Fußpfette.

Die Pfette 19 wird von zwei endseitig daran angebrachten Pfosten 21 gestützt, welche in einem Boden 22 verankert sind. Ferner ist daran eine quer zu den Sparren 28 bzw. parallel zu der Pfette 19 verlaufende Dachrinne 23 mit zugehörigem Abflussrohr zur Aufnahme und Abführung von Niederschlag vorgesehen.

In den Sparrenhaltern der Sparren 28 sind vorzugsweise elektrische Anschlüsse integriert. Erfindungsgemäß kann eine derartige Überdachungsvorrichtung 20 somit während oder nach der Montage auf einfache Weise mit einer Beleuchtung, insbesondere Ambientebeleuchtung, versehen werden, indem streifenartige Leuchtmittel 1 in den Nuten 3 der Sparren 28 eingesetzt, mit den Anschlüssen kontaktiert und mit dem erfindungsgemäßen Befestigungsmittel 4 befestigt werden.

Darüber hinaus ist die Terrassenüberdachung mit den in der DE 20 2016 005 196 U1 weiter im Detail beschriebenen weiteren Elementen aufgebaut.

Fig. 8 zeigt eine perspektivische Darstellung einer Terrassenüberdachung mit Firstpfette.

Im Unterschied zur Ausführungsform gemäß Fig. 7 ist die Überdachungsvorrichtung 20 hier nicht in Anschluss an eine Wand, sondern freistehend und beidseitig abfallend ausgebildet. Die Statikelemente 2 unterscheiden sich somit wie folgt:
Anstatt einem Wandanschlussprofil 26 ist hier dementsprechend eine Firstpfette 27 vorgesehen, welche beidseitig eine Mehrzahl von Sparren 28 lagert sowie alle weiteren in Bezug auf Fig. 7 beschriebenen Elemente aufweist. Die Firstpfette 27 ist mittels eines Schwenklagers gelenkig an einer parallel zu der Firstpfette 27 verlaufenden Mittelpfette 19' gelagert, welche endseitig an mittleren Pfosten 21' gelagert ist.

Beidseitig sind hier an dem jeweils der Firstpfette 27 abgewandten Ende der Sparren 28 als Fußpfetten angeordnete Pfetten 19 und daran angeschlossene Dachrinnen 23 vorgesehen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Beispielsweise muss der LED Streifen 6 nicht notwendigerweise in dem C Profil 13 aufgenommen sein. Denkbar wäre vielmehr auch, die Rastmittel 17 des Befestigungsabschnitts 10 und die Gegenrastmittel 14 der Nut 3 derart aufeinander abzustimmen, dass der LED Streifen 6 direkt zwischen die Gegenrastmittel 14 eingesetzt werden kann, ohne dass er bei dem Befestigen beschädigt wird.

### Bezugszeichenliste

- 1: Leuchtmittel
- 2: Statikelement3 Ausnehmung bzw. Nut
- 4: Befestigungsmittel
- 5: Griff
- 6: LED Streifen
- 7: Breite
- 8: Nutbreite
- 9: Länge
- 10: Befestigungsabschnitt
- 11: Fuß
- 12: Sollbruchstelle
- 13: C-Profil
- 14: Gegenrastmitte
- 15: Breite
- 16: LED
- 17: Rastmittel
- 18: Rastfortsätze
- 19, 19': Pfette
- 20: Überdachungsvorrichtung
- 21, 21': Pfosten
- 22: Boden
- 23: Dachrinne
- 24: Ausfachung
- 25: Wand
- 26: Wandanschlussprofil
- 27: Firstpfette
- 28: Sparren

## Patentansprüche

1. Verfahren zur Montage eines Leuchtmittels (1) an einem Statikelement (2) einer Überdachungsvorrichtung (20), mit den folgenden Schritten:
Einführen des Leuchtmittels (1) in eine in dem Statikelement (2) zur Aufnahme des Leuchtmittels vorgesehene Ausnehmung (3);
Einführen eines einen Griff (5) aufweisenden Befestigungsmittels (4) in die Ausnehmung (3);
Befestigen des Leuchtmittels (1) mit dem Befestigungsmittel (4) in der Ausnehmung (3) durch händische Manipulation des Griffs (5); und
Abtrennen des Griffs (5) von dem Befestigungsmittel (4) durch händische Manipulation des Griffs (5),
wobei die Schritte in dieser Reihenfolge durchgeführt werden.

2. Verfahren nach Anspruch 1,
**dadurch gekennzeichnet,**
**dass** das Befestigungsmittel (4) als Rastmittel (17) ausgebildet ist und durch Manipulation des Griffs (5) in der Ausnehmung verrastet wird.

3. Verfahren nach Anspruch 2,
**dadurch gekennzeichnet,**
**dass** die zum Verrasten vorgenommene Manipulation des Griffs (5) das Aufbringen einer Druckbelastung auf das Rastmittel (17) umfasst.

4. Verfahren nach einem der vorstehenden Ansprüche, **dadurch gekennzeichnet,**
**dass** Abtrennen ein Tordieren durch Verdrehen des Griffs (5) umfasst.

5. Verfahren nach einem der vorstehenden Ansprüche, **dadurch gekennzeichnet,**
**dass** das Leuchtmittel (1) einen LED Streifen (6) aufweist und das Befestigungsmittel (4) zum Befestigen in einem Bereich zwischen zwei benachbarten LEDs (16) des LED Streifens (6) angeordnet wird.

6. Verfahren nach einem der vorstehenden Ansprüche, **dadurch gekennzeichnet,**
**dass** die Ausnehmung (3) als Nut ausgebildet ist und das Befestigungsmittel (4) eine Breite (7) aufweist, welche größer als eine offene Nutbreite (8) ausgebildet ist, wobei die offene Nutbreite (8) größer als eine Länge (9) des Befestigungsmittels (4) ausgebildet ist, und wobei das Einführen in die Nut in einer ersten Stellung (A) des Befestigungsmittels vorgenommen wird, welche zu einer zweiten Stellung (C) bei dem Befestigen verdreht, insbesondere um etwa 90° verdreht, vorgesehen wird.

7. Befestigungsmittel (4) zur Überkopfmontage und Befestigung eines streifenartigen Bauteils, insbesondere eines streifenartigen Leuchtmittels, mit:
einem Befestigungsabschnitt (10), und
einem einteilig mit dem Befestigungsabschnitt (10) und davon abstehend ausgebildeten Griff (5), wobei der Befestigungsabschnitt (10) zur händisch über den Griff (10) betätigten Befestigung des streifenartig ausgebildeten Bauteils in einer in einem Statikelement (2) vorgesehenen Ausnehmung (3) ausgebildet ist,
wobei an einem an den Befestigungsabschnitt (10) anschließenden Fuß (11) des Griffs eine Sollbruchstelle (12) vorgesehen ist, welche ausgebildet und vorgesehen ist, zur händisch betätigten Befestigung des streifenartig ausgebildeten Bauteils in der in dem Statikelement (2) vorgesehenen Ausnehmung (3) standzuhalten und in einem befestigten Zustand des über Kopf montierten streifenartig ausgebildeten Bauteils den Griff (5) durch händische Manipulation von dem Befestigungsabschnitt (10) abzutrennen.

8. Befestigungsmittel nach Anspruch 7,
**dadurch gekennzeichnet,**
**dass** die Sollbruchstelle (12) zum Abtrennen durch eine zum händischen Befestigen unterschiedliche händische Manipulation ausgebildet ist

9. Befestigungsmittel nach Anspruch 7 oder 8,
**dadurch gekennzeichnet,**
**dass** der Griff (5) und die Sollbruchstelle (12) zur Befestigung des Befestigungsabschnitts durch händischen Druck und zum Abtrennen des Griffs (5) durch händische Torsion ausgebildet sind.

10. Befestigungsmittel nach einem der Ansprüche 7 bis 9, **dadurch gekennzeichnet,**
**dass** der Befestigungsabschnitt (10) als Rastmittel, insbesondere als spangenartig ausgebildetes Rastmittel, ausgebildet ist und der Befestigungsgriff (5) mit seinem Fuß (11) daran angeformt ist.

11. Überdachungsvorrichtung (20), mit:
einem Statikelement (2), welches eine zur Aufnahme eines streifenartigen Leuchtmittels (1) vorgesehene Nut (3) aufweist,
einem in der Nut (3) angeordneten streifenartigen Leuchtmittel (1), und
einem Befestigungsmittel (4) nach einem der Ansprüche 7 bis 10 in Form eines spangenartig ausgebildeten Rastmittels (10), welches das streifenartige Leuchtmittel (1) in der Nut (3) befestigt.

12. Überdachungsvorrichtung nach Anspruch 11,
**dadurch gekennzeichnet,**
**dass** das streifenartige Leuchtmittel (1) einen LED-Streifen (6), insbesondere einen in einem C-Profil (13) aufgenommenen LED-Streifen (6), aufweist, welcher in der Nut (3) gelagert und darin mit dem spangenartigen Rastmittel (10) befestigt ist.

13. Überdachungsvorrichtung nach Anspruch 12,
**dadurch gekennzeichnet,**
**dass** sich das spangenartige Rastmittel (10) quer über das streifenartige Leuchtmittel (1) erstreckt und in einem Zwischenraum zwischen zwei benachbarten LEDs (16) des LED-Streifens (6) angeordnet ist.

14. Überdachungsvorrichtung nach einem der Ansprüche 11 bis 13,
**dadurch gekennzeichnet,**
**dass** innerhalb der Nut (3) zu dem Rastmittel (10) korrespondierende Gegenrastmittel (14) vorgesehen sind, welche mit dem Rastmittel (10) in Eingriff stehen.

15. Überdachungsvorrichtung nach Anspruch 14,
**dadurch gekennzeichnet,**
**dass** die Nut (3) breiter als das streifenartige Leuchtmittel (1) ausgebildet ist und die Gegenrastmittel (14) auf eine Breite (15) des streifenartigen Leuchtmittels (1) abgestimmt angeordnet sind und eine laterale Position des streifenartigen Leuchtmittels (1) in der Nut (3) vorgeben.

## Claims

1. Method for mounting a lighting means (1) on a static element (2) of a roofing device (20), comprising the following steps:
inserting the lighting means (1) into a recess (3) provided in the static element (2) for receiving the lighting means;
inserting a fastening means (4) having a handle (5) into the recess (3);
fastening the lighting means (1) using the fastening means (4) in the recess (3) by manually manipulating the handle (5); and
separating the handle (5) from the fastening means (4) by manually manipulating the handle (5),
wherein the steps are carried out in this order.

2. Method according to claim 1,
**characterised**
**in that** the fastening means (4) is configured as a locking means (17) and is locked in the recess by manipulating the handle (5).

3. Method according to claim 2,
**characterised**
**in that** the manipulation of the handle (5) carried out for locking comprises applying pressure to the locking means (17).

4. Method according to any of the preceding claims, **characterised**
**in that** the separation comprises twisting by turning the handle (5).

5. Method according to any of the preceding claims, **characterised**
**in that** the lighting means (1) has an LED strip (6), and, for fastening, the fastening means (4) is arranged in a region between two adjacent LEDs (16) of the LED strip (6).

6. Method according to any of the preceding claims, **characterised**
**in that** the recess (3) is configured as a groove, and the fastening means (4) has a width (7) which is greater than an open groove width (8), the open groove width (8) being greater than a length (9) of the fastening means (4), and the insertion into the groove being carried out in a first position (A) of the fastening means, which is rotated into a second position (C) during fastening, in particular rotated through approximately 90°.

7. Fastening means (4) for mounting overhead and fastening a strip-like component, in particular a strip-like lighting means, comprising:
a fastening portion (10) and
a handle (5) formed in one piece with and projecting from the fastening portion (10), the fastening portion (10) being configured for manually fastening the strip-like component via the handle (10) in a recess (3) provided in a static element (2),
a predetermined breaking point (12) being provided on a foot (11) of the handle adjoining the fastening portion (10), and being configured and provided to withstand the manual fastening of the strip-like component in the recess (3) provided in the static element (2) and, when the strip-like component mounted overhead is fastened, to separate the handle (5) from the fastening portion (10) by manual manipulation.

8. Fastening means according to claim 7,
**characterised**
**in that** the predetermined breaking point (12) is configured for separation by a manual manipulation other than manual fastening.

9. Fastening means according to either claim 7 or claim 8, **characterised**
**in that** the handle (5) and the predetermined breaking point (12) are configured for fastening the fastening portion by manual pressure and for separating the handle (5) by manual torsion.

10. Fastening means according to any of claims 7 to 9, **characterised**
**in that** the fastening portion (10) is configured as a locking means, in particular as a clip-like locking means, and the foot (11) of the fastening handle (5) is integrally formed thereon.

11. Roofing device (20), comprising:
a static element (2) which has a groove (3) provided for receiving a strip-like lighting means (1),
a strip-like lighting means (1) arranged in the groove (3), and
a fastening means (4) according to any of claims 7 to 10 in the form of a clip-like locking means (10) which fastens the strip-like lighting means (1) in the groove (3).

12. Roofing device according to claim 11,
**characterised**
**in that** the strip-like lighting means (1) comprises an LED strip (6), in particular an LED strip (6) received in a C-profile (13), which is mounted in the groove (3) and fastened therein using the clip-like locking means (10).

13. Roofing device according to claim 12,
**characterised**
**in that** the clip-like locking means (10) extends transversely over the strip-like lighting means (1) and is arranged in a gap between two adjacent LEDs (16) of the LED strip (6).

14. Roofing device according to any of claims 11 to 13, **characterised**
**in that** counter locking means (14), corresponding to the locking means (10) and engaged with the locking means (10), are provided within the groove (3).

15. Roofing device according to claim 14,
**characterised**
**in that** the groove (3) is configured wider than the strip-like lighting means (1), and the counter locking means (14) are arranged matching a width (15) of the strip-like lighting means (1) and predetermine a lateral position of the strip-like lighting means (1) in the groove (3).

## Revendications

1. Procédé de montage d'un moyen d'éclairage (1) sur un élément statique (2) d'un dispositif de couverture (20), comportant les étapes suivantes :
introduction du moyen d'éclairage (1) dans un évidement (3) prévu dans l'élément statique (2) pour loger le moyen d'éclairage ;
introduction d'un moyen de fixation (4) présentant une poignée (5) dans l'évidement (3) ;
fixation du moyen d'éclairage (1) à l'aide du moyen de fixation (4) dans l'évidement (3) par manipulation manuelle de la poignée (5) ; et
séparation de la poignée (5) du moyen de fixation (4) par manipulation manuelle de la poignée (5),
les étapes étant effectuées dans cet ordre.

2. Procédé selon la revendication 1,
**caractérisé en ce**
**que** le moyen de fixation (4) est conçu comme un moyen d'encliquetage (17) et est encliqueté dans l'évidement par manipulation de la poignée (5).

3. Procédé selon la revendication 2,
**caractérisé en ce**
**que** la manipulation de la poignée (5) effectuée pour l'encliquetage comprend l'application d'une charge de pression sur le moyen d'encliquetage (17).

4. Procédé selon l'une des revendications précédentes, **caractérisé en ce**
**que** la séparation comprend une torsion par rotation de la poignée (5).

5. Procédé selon l'une des revendications précédentes, **caractérisé en ce**
**que** le moyen d'éclairage (1) présente une bande LED (6) et le moyen de fixation (4) est disposé dans une zone entre deux LED (16) voisines de la bande LED (6) pour la fixation.

6. Procédé selon l'une des revendications précédentes, **caractérisé en ce**
**que** l'évidement (3) est conçu comme une rainure et le moyen de fixation (4) présente une largeur (7) qui est supérieure à une largeur de rainure ouverte (8), la largeur de rainure ouverte (8) étant supérieure à une longueur (9) du moyen de fixation (4) et l'introduction dans la rainure étant effectuée dans une première position (A) du moyen de fixation qui est prévue tournée vers une deuxième position (C) lors de la fixation, en particulier tournée d'environ 90°.

7. Moyen de fixation (4) pour le montage en hauteur et la fixation d'un élément en forme de bande, en particulier d'un moyen d'éclairage en forme de bande, comportant :
une partie de fixation (10), et
une poignée (5) formée d'une seule pièce avec la partie de fixation (10) et faisant saillie de celle-ci, la partie de fixation (10) étant conçue pour la fixation manuelle, actionnée par la poignée (10), de l'élément en forme de bande dans un évidement (3) prévu dans un élément statique (2),
un point de rupture (12) étant prévu sur un pied (11) de la poignée faisant suite à la partie de fixation (10), lequel est conçu et prévu pour résister à la fixation actionnée manuellement de l'élément en forme de bande dans l'évidement prévu dans l'élément statique (2) (3) et, dans un état fixé de l'élément en forme de bande monté en hauteur, pour séparer la poignée (5) de la partie de fixation (10) par une manipulation manuelle.

8. Moyen de fixation selon la revendication 7, **caractérisé en ce**
**que** le point de rupture (12) est conçu pour la séparation par une manipulation manuelle différente de celle utilisée pour la fixation manuelle.

9. Moyen de fixation selon la revendication 7 ou 8, **caractérisé en ce**
**que** la poignée (5) et le point de rupture (12) sont conçus pour la fixation de la partie de fixation par pression manuelle et pour la séparation de la poignée (5) par torsion manuelle.

10. Moyen de fixation selon l'une des revendications 7 à 9, **caractérisé en ce**
**que** la partie de fixation (10) est conçue comme un moyen d'encliquetage, en particulier comme un moyen d'encliquetage en forme d'agrafe, et la poignée de fixation (5) avec son pied (11) est surmoulée à celle-ci.

11. Dispositif de couverture (20), comportant :
un élément statique (2) qui présente une rainure (3) prévue pour loger un moyen d'éclairage en forme de bande (1),
un moyen d'éclairage en forme de bande (1) disposé dans la rainure (3), et
un moyen de fixation (4) selon l'une des revendications 7 à 10 sous la forme d'un moyen d'encliquetage (10) en forme d'agrafe qui fixe le moyen d'éclairage en forme de bande (1) dans la rainure (3).

12. Dispositif de couverture selon la revendication 11, **caractérisé en ce**
**que** le moyen d'éclairage en forme de bande (1) présente une bande LED (6), en particulier une bande LED (6) logée dans un profilé en C (13), qui est montée dans la rainure (3) et y est fixée à l'aide du moyen d'encliquetage en forme d'agrafe (10).

13. Dispositif de couverture selon la revendication 12, **caractérisé en ce**
**que** le moyen d'encliquetage en forme d'agrafe (10) s'étend transversalement sur le moyen d'éclairage en forme de bande (1) et est disposé dans un espace intermédiaire entre deux LED (16) voisines de la bande LED (6).

14. Dispositif de couverture selon l'une des revendications 11 à 13,
**caractérisé en ce**
**que** des moyens d'encliquetage complémentaires (14) correspondant aux moyens d'encliquetage (10) sont prévus à l'intérieur de la rainure (3), lesquels viennent en prise avec les moyens d'encliquetage (10).

15. Dispositif de couverture selon la revendication 14, **caractérisé en ce**
**que** la rainure (3) est conçue plus large que le moyen d'éclairage en forme de bande (1) et les moyens d'encliquetage complémentaires (14) sont disposés de manière adaptée à une largeur (15) du moyen d'éclairage en forme de bande (1) et définissent une position latérale du moyen d'éclairage en forme de bande (1) dans la rainure (3).
